# EUROPÄISCHE PATENTSCHRIFT

(11) **EP 0 697 299 B1**
(45) Veröffentlichungstag und Bekanntmachung des Hinweises auf die Patenterteilung: **30.01.2002**
(21) Anmeldenummer: 95112776.0
(22) Anmeldetag: 14.08.1995
(51) Int. Cl.: B60J 7/02

(54) **Dachaufbau für ein Fahrzeug**
Roof structure for vehicle
Structure de toit pour véhicule

(30) Priorität: 16.08.1994 DE 4428913
(43) Veröffentlichungstag der Anmeldung: 21.02.1996
(73) Patentinhaber: WEBASTO KAROSSERIESYSTEME GmbH, D-82131 Stockdorf (DE)
(72) Erfinder: Schätzler, Walter, D-82139 Starnberg (DE); Kleiner, Robert, Ing., D-82139 Starnberg (DE); Eckert, Dieter, D-71067 Sindelfingen (DE); Zirbs, Thomas, D-71263 Weil d.Stadt 2 (DE)
(74) Vertreter: Wiese, Gerhard

(56) Entgegenhaltungen:
- FR-A- 2 701 677
- GB-A- 1 038 236
- NL-A- 6 506 179
- US-A- 4 333 680

## Beschreibung

Die Erfindung betrifft einen Dachaufbau für ein Fahrzeug mit einem eine Dachöffnung in einem festen Fahrzeugdach wahlweise verschließenden oder wenigstens teilweise freigebenden Deckel, dessen Betätigungsmechanik an einem die Dachöffnung von der Unterseite her umgebenden Schiebedachrahmen angeordnet ist, gemäß dem Oberbegriff des Patentanspruchs 1.

Bei herkömmlichen öffnungsfähigen Fahrzeugdächern wird der Dachaufbau nach Herstellen der Dachöffnung mittels eines die Dachöffnung von der Unterseite her umgebenden Verstärkungsrahmens versteift, der mit dem festen Fahrzeugdach beispielsweise durch Schweißen verbunden wird (DE-C1 32 22 419). An diesem Verstärkungsrahmen wird anschließend eine den eigentlichen Schiebedachrahmen umfassende Einheit angeschraubt.

Es ist ferner aus der DE 40 24 837 A1 ein Verfahren zur Herstellung eines Fahrzeugdachs mit einem Schiebedachausschnitt bekannt, bei dem in einem ersten Verfahrensschritt an der Dachhaut mit dem Schiebedachausschnitt ein Verstärkungsrahmen bzw. ein Rahmenteil von unten her justiert und im Bereich eines im fertigen Zustand des Fahrzeugdachs darunterliegenden, seitlichen Dachholms eines Dachrahmens der Karosserie mit einem seitlichen Rand verklebt wird, in einem zweiten Verfahrensschritt auf jeden der seitlichen Dachholme in Längsrichtung Klebstoff in Form einer längs verlaufenden Klebstoffraupe aufgetragen wird, und in einem dritten Verfahrensschritt die Dachhaut zusammen mit dem verklebten Verstärkungsrahmen auf die Karosserie bzw. den Dachrahmen mit der Klebstoffraupe abgesenkt wird, wobei der verklebte Bereich von Dachhaut und Rand des Verstärkungsrahmens auf der Klebstoffraupe zu liegen kommt und diese zusammendrückt, so daß damit der Rand des Verstärkungsrahmens in den Klebstoff aus dem ersten und dritten Verfahrensschritt eingebunden ist. Dabei ist offengelassen, wie der die Betätigungsmechanik des Schiebedachdeckels tragende eigentliche Schiebedachrahmen mit der Dachhaut und/oder dem Verstärkungsrahmen verbunden ist.

Gemeinsam ist beiden bekannten Fahrzeugdächern, daß die Gestaltung des Dachaufbaus aurwendig und kostspielig ist.

Der vorliegenden Erfindung liegt die Aufgabe zugrunde, einen Dachaufbau sowohl hinsichtlich des Materialeinsatzes als auch des Montageaufwandes zu vereinfachen.

Diese Aufgabe wird durch die Merkmale des Patentanspruchs 1 gelöst. Vorteilhafte Ausgestaltungen der Erfindung sind den Unteransprüchen zu entnehmen.

Durch das unmittelbare Verkleben des Schiebedachrahmens mit dem festen Fahrzeugdach wird ein Verstärkungsrahmen völlig entbehrlich. Durch das Einbringen zweier Kleberaupen zwischen dem Schiebdachrahmen und dem festen Fahrzeugdach wird ferner neben der mechanischen-Befestigung zugleich eine wasserdichte Verbindung zwischen beiden Teilen gewährleistet. Auf das sonst übliche Einbringen zusätzlichen Dichtmaterials kann somit ebenfalls völlig verzichtet werden.

Die vorliegend verwendeten Begriffe "Schiebedach" beziehungsweise "Schiebedachrahmen" sind allgemein zu verstehen, indem sie nicht nur für eigentliche Schiebedächer, sondern auch für Schiebehebedächer, Spoilerdächer und andere Dächer mit mindestens einem verstellbaren Deckel, beziehungsweise für den Rahmen solcher Dächer stehen sollen.

Zur Erhöhung der Steifigkeit des Dachaufbaus bildet der Schiebedachrahmen im Zusammenwirken mit den Kleberaupen wenigstens ein Hohlkammerprofil. Hohlkammerprofile weisen gegenüber flachen Profilen eine wesentlich höhere Torsions- und Biegesteifigkeit bei gleichem Gewicht auf.

Ein solches Hohlkammerprofil Kann ergänzend als integraler Bestandteil des Schiebedachrahmens vorgesehen sein. In jedem Falle ist vorgesehen, daß der Schiebedachrahmen ein offenes Profilteil aufweist, das in Verbindung mit zwei voneinander beabstandeten Kleberaupen und dem festen Fahrzeugdach ein Hohlkammerprofil bildet. Eine vorteilhafte Variante besteht dabei darin, daß der Schiebedachrahmen in seinem von der Dachöffnung wegweisenden Bereich ein L-förmiges Profil aufweist, dessen vertikal liegender Schenkel am oberen Ende einen im wesentlichen horizontalen Steg aufweist, wobei eine der Kleberaupen auf der Oberseite dieses Steges und die zweite Kleberaupe am Ende eines horizontalen Schenkels des L-Profils angeordnet ist.

Für eine weitere Vereinfachung des Dachaufbaues ist es vorteilhaft, daß im Schiebedachrahmen Führungskanäle für die Betätigungsmechanik des Deckels integriert sind. Somit können die erforderlichen Führungskanäle bei Herstellung des Schiebedachrahmen-Profils beispielsweise im Strangpreßverfahren direkt mit eingebracht werden, wodurch zusätzlich die ansonsten übliche Befestigung separater Führungsschienen am Schiebedachrahmen entbehrlich wird.

Für eine unmittelbare Befestigung einer im Randbereich der Dachöffnung zum Deckel hin angeordneten Dichung beim Verbinden des Schiebedachrahmens mit dem festen Fahrzeugdach ist es vorteilhaft, daß der Schiebedachrahmen und das feste Fahrzeugdach im Randbereich der Dachöffnung einen Spalt zur Aufnahme der Dichtung bilden. Zur Fixierung einer solchen Dichtung kann der Schiebedachrahmen und/oder das feste Fahrzeugdach wenigstens einen im wesentlichen vertikal verlaufenden Bereich, wie z.B. Rippen oder eine Abkantung, aufweisen.

Vorteilhafterweise wird ferner vom Schiebedachrahmen selbst unmittelbar eine Wasserrinne zur Abfuhr von Regenwasser gebildet.

In weiterer Ausgestaltung der Erfindung läßt sich die Höhe der ausgehärteten Kleberaupen nutzen, um für eine Höheneinstellung des Deckels gegenüber dem festen Fahrzeugdach zu sorgen.

Nachfolgend sind mehrere Ausführungsformen der Erfindung anhand der Zeichnung dargestellt. Es zeigt:
- Fig. 1: eine Draufsicht auf ein Fahrzeugdach mit einem eine Dachöffnung umgebenden Dachrahmen,
- Fig. 2: einen Querschnitt gemäßt der Linie II-II in Fig. 1 zur Verdeutlichung einer ersten Ausführungsform,
- Fig. 3: eine erste Variante zur Fig. 2,
- Fig. 4: eine zweite Variante zur Fig. 2.

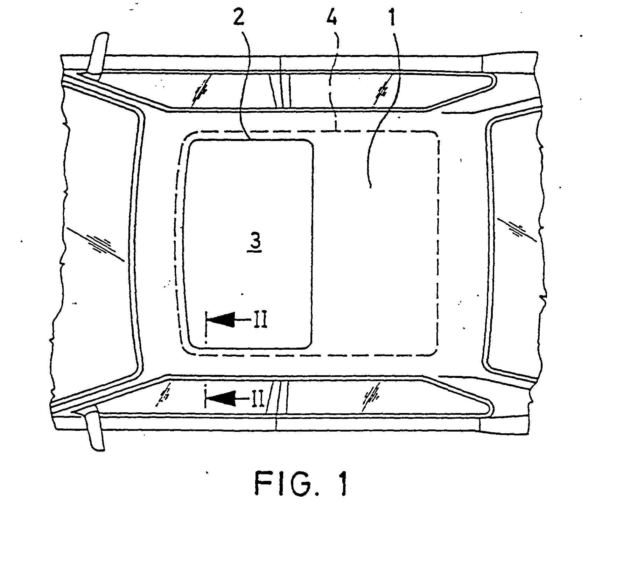

In Fig. 1 ist ein festes Fahrzeugdach 1 eines teilweise angedeuteten Fahrzeuges dargestellt, bei dem eine Dachöffnung 2 mittels eines Deckels 3 wahlweise verschließbar oder wenigstens teilweise freilegbar ist. Die nicht dargestellte, für eine Betätigung des Deckels 3 erforderliche an beiden Seiten angeordnete Mechanik ist an einem die Dachöffnung 2 von der Unterseite her umgebenden Schiebedachrahmen 4 angeordnet.

Bei einer ersten Ausführungsform eines Dachaufbaues weist das feste Fahrzeugdach 1 am Rande der Dachöffnung 2 eine Abkantung 1A auf. Das feste Fahrzeugdach 1 weist ferner benachbart zu einem längs verlaufenden Seitenholm 1C eine Sicke 1B auf, in deren Verlauf mehrere, die Rohkarosse bildende Bleche zusammengefügt sind. Der unterhalb des festen Fahrzeugdaches angeordnete Schiebedachrahmen 4 besteht in seinem von der Dachöffnung 2 abgewandten Teil aus einem Profil, welches die Form eines liegenden L aufweist. Dieses Profil wird von einem horizontalen Schenkel 44 und einem vertikalen Schenkel 45 gebildet. An den vertikalen Schenkel 45 schließt sich nach oben ein im wesentlichen horizontal verlaufender Steg 46 an. Der Schiebedachrahmen 4 weist ferner an seiner der Dachöffnung 2 zugewandten Innenseite Führungskanäle 41 bzw. 42 auf, die zur Aufnahme nicht dargestellter, eine Betätigungsmechanik des Deckels 3 lagernder Gleitelemente geeignet sind. Ein weiterer Führungskanal 43 für eine Beherbergung eines die Deckelmechanik antreibenden spiralförmigen Antriebskabels ist ebenfalls unmittelbar in das Profil des Schiebedachrahmens 4 eingeformt. Der Steg 46 weist ferner an seiner der Dachöffnung 2 zugewandten Seite zwei kurze Rippen 47 auf, die zur Halterung eines entsprechend geformten leistenförmigen Halteteils einer Dichtung 8 dienen, die die Dachöffnung 2 umgibt. Die Dichtung 8 wird vor der Montage des Schiebedachrahmens 4 auf den mit den Rippen 47 versehenen Teil aufgesteckt und beim anschließenden Verkleben des Schiebedachrahmens mittels zweier Kleberaupen 5 bzw. 6 in dem Spalt zwischen Steg 46 und der Abkantung 1A des festen Fahrzeugdaches festgeklemmt.

Die Kleberaupe 5 wird am Ende des horizontalen Schenkels 44 und die Kleberaupe 6 auf die Oberseite des Steges 46 aufgebracht. Der Deckel 3 ist mittels der nicht gezeigten Betätigungsmechanik mit dem Schiebedachrahmen 4 verbunden. Der Schiebedachrahmen 4 wird nun von unten her an das feste Fahrzeugdach 1 angedrückt, wobei im Bereich der Dichtung 8 ein eine bündige Ausrichtung des Deckels 3 gegenüber dem festen Fahrzeugdach 1 gewährleistender Gegenhalter 50 zum Einsatz kommt. Das L-förmige Profilteil des Schiebedachrahmens 4 bildet nach Aushärten der Kleberaupen 5 bzw. 6 in Verbindung mit dem darüberliegenden Teil des festen Fahrzeugdaches 1 ein Hohlkammerprofil 7, das eine hohe Torsions- und Biegesteifigkeit aufweist, die einem herkömmlichen Dachaufbau mit einem aus flachen Blechen bestehenden Verstärkungsrahmen in nichts nachsteht.

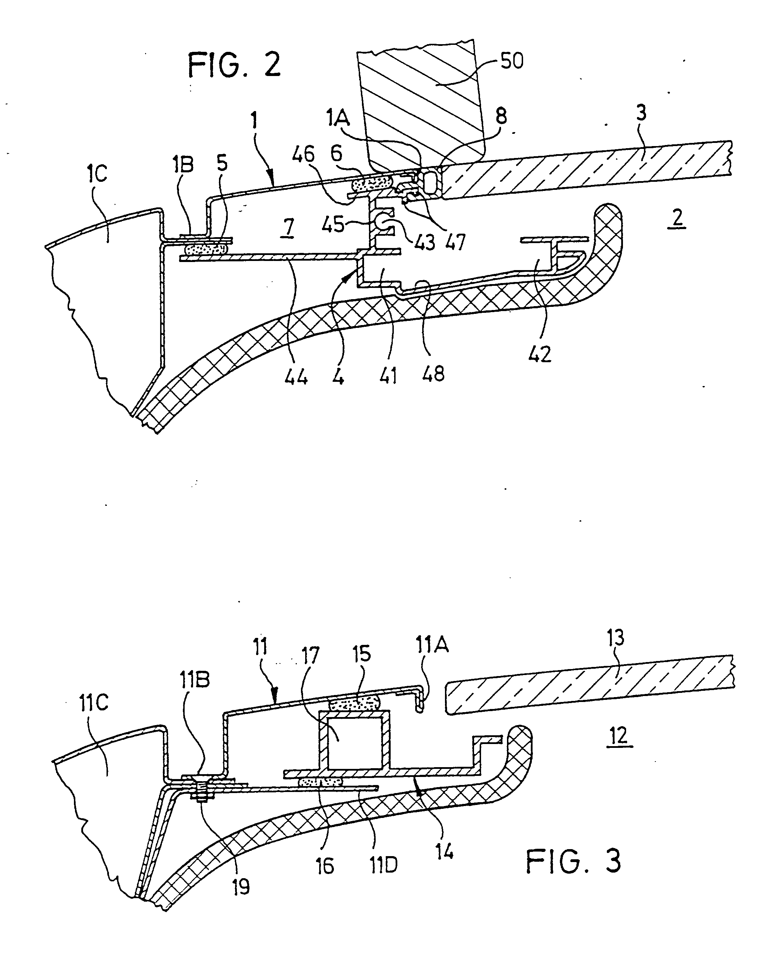

Bei der in Fig. 3 gezeigten Variante sind alle zur Fig. 2 analogen Teile mit einer um 10 erhöhten Bezugszahl versehen. Bei dieser Variante weist der Schiebedachrahmen 14 selbst unmittelbar ein Hohlkammerprofil 17 auf. Dieses Schiebedachrahmen-Profil 14 wird mittels zweier Kleberaupen 15 bzw. 16 zwischen einem oberen Teil der festen Dachhaut 11 und einem von einer Sicke 11B nach innen weisenden Verstärkungsblech 11D befestigt. Dabei kann das Verstärkungsblech 11D im Bereich der Sicke 11B auch beispielsweise durch eine Verschraubung 19 befestigt sein. Bei dieser Variante weist zum einen der Schiebedachrahmen 14 selbst ein Hohlkammerprofil 17 auf, zum anderen wird eine weitere Hohlkammer von Dachrahmen 14, den Kleberaupen 15 und 16 und dem festen Fahrzeugdach 11 bzw. 11B gebildet.

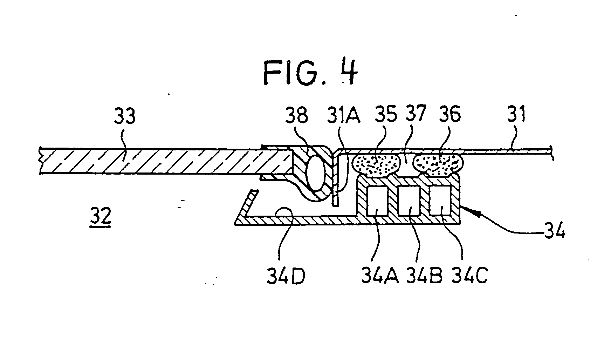

Bei einer weiteren Variante gemäß Fig. 4 sind alle zur Fig. 2 analogen Teile mit einer um 30 erhöhten Bezugszahl versehen. Bei der Fig. 4 ist eine Dichtung 38 am Deckel 33 befestigt, anstatt diese wie in Fig. 2 am festen Fahrzeugdach 1 vorzusehen. Der in Fig. 4 dargestellte Schiebedachrahmen 34 weist durch mehrere vertikale Stege voneinander getrennte Hohlkammern 34A, 34B und 34C auf. Zur zusätzlichen Erhöhung der Steifigkeit bilden zwei zwischen der Oberseite des Schiebedachrahmens 34 und der Innenseite des festen Fahrzeugdaches 31 aufgebrachte Kleberaupen 35 und 36 ein Hohlkammerprofil 37. Wie in Fig. 2 mit Bezugszahl 48 angedeutet, bildet in allen Varianten das den Rand der Dachöffnung 2 untereifende Profil des Schiebedachrahmens 4 gleichzeitig auch eine Regenrinne. In Fig. 4 ist diese mit 34D angedeutet.

Zur unmittelbaren Verklebung des Schiebedachrahmens mit dem festen Fahrzeugdach sind alle hochfesten Kleber geeignet, die bezüglich der Festigkeit und einer kurzen Aushärtezeit den Anforderungen einer modernen Großserienfertigung entsprechen. Dies können Zweikomponentenkleber ebenso sein, wie Kleber, deren Aushärtung beispielsweise durch Ultraschalleinwirkung beschleunigt wird. Für ein späteres Entfernen des Schiebedachrahmens vom festen Fahrzeugdach - beispielsweise zu Reparaturzwecken-ist es in jedem Falle vorteilhaft, in die Kleberaupen entweder einen Ausreißfaden einzubetten oder einen Heizdraht vorzusehen, mittels dessen die Kleberaupen bei Bedarf zum Schmelzen gebracht werden können.

Bei allen vorstehend geschilderten Ausführungsformen ist eine besonders einfache Höheneinstellung des Deckels gegenüber dem festen Fahrzeugdach dadurch möglich, daß beim Einbau des Schiebedachrahmens die Höhe der noch nicht ausgehärteten. Kleberaupen entsprechend variiert wird, indem der Schiebedachrahmen und das Fahrzeugdach bezüglich ihrer Höhenlage gegenseitig geeignet eingestellt werden. Die Kleberaupen werden dann unter Aufrechterhaltung dieser gegenseitigen Höheneinstellung ausgehärtet. Dadurch können zusätzlich Höheneinstellvorrichtungen vollkommen entfallen.

Wenn vorstehend von einem Schiebedachrahmen gesprochen wird, so sollen damit sowohl einteilig vormontierte Baugruppen als auch separate Schiebedachrahmenteile umfaßt sein, die beispielsweise erst beim Verkleben mit dem festen Fahrzeugdach zu einem Rahmen zusammengefügt werden. Auch wenn der Kern der Erfindung im unmittelbaren Verkleben eines Schiebedachrahmens mit einem festen Fahrzeugdach liegt, können ggfs. weitere Befestigungsarten, wie Schrauben, Verclipsen oder ähnliche, hinzutreten.

Durch die Erfindung wird ein Dachaufbau für ein Fahrzeug mit einem öffnungsfähigen Fahrzeugdach geschaffen, der bei einfachster Montage und geringstem Materialeinsatz in jedem Falle eine hohe Steifigkeit gewährleistet. Für eine Serienausstattung mit Schiebedächern bzw. Schiebehebedächern sind durch Anwendung der vorliegenden Erfindung bedeutsame Kostenreduzierungen zu erwarten.

## Patentansprüche

1. Dächaufbau für ein Fahrzeug mit einem eine Dachöffnung (2; 12, 32) in einem festen Fahrzeugdach (1; 11; 31) wahlweise verschließenden Deckel (3; 13; 23; 33), dessen Betätigungsmechanik an einem die Dachöffnung (2; 12; 32) von der Unterseite her umgebenden Schiebedachrahmen (4; 14; 34) angeordnet ist, welcher durch wenigstens eine Kleberaupe (5,6; 15,16; 35,36) mit dem festen Fahrzeugdach (1; 11; 31) unmittelbar verbunden ist, **dadurch gekennzeichnet, daß** ein offenes Profilteil (44, 45) des Schiebedachrahmens (4) durch zwei voneinander beabstandete Kleberaupen (5, 6) gemeinsam mit dem festen Fahrzeugdach (1) ein Hohlkammerprofil (7) bildet.

2. Dachaufbau nach Anspruch 1, **dadurch gekennzeichnet, daß** zusätzlich wenigstens ein dem Fahrzeugdach erhöhte Biege- und Torsionssteifigkeit verleihendes Hohlkammerprofil (7; 17; 37; 34A,34B,34C) als integraler Bestandteil des Schiebedachrahmens (14; 24; 34) vorgesehen ist.

3. Dachaufbau nach Anspruch 1 oder 2, **dadurch gekennzeichnet, daß** der Schiebedachrahmen (4) in seinem von der Dachöffnung (2) wegweisenden Bereich ein L-förmiges Profil aufweist, dessen vertikal liegender Schenkel (45) am oberen Ende einen im wesentlichen horizontalen Steg (46) aufweist, wobei eine der Kleberaupen (6) auf der Oberseite dieses Steges (46) und die zweite Kleberaupe (5) am Ende eines horizontalen Schenkels (44) angeordnet ist.

4. Dachaufbau nach wenigstens einem der vorhergehenden Ansprüche, **dadurch gekennzeichnet, daß** im Schiebedachrahmen (4) Führungskanäle (41,42,43) für eine Betätigungsmechanik des Deckels (3) integriert sind.

5. Dachaufbau nach wenigstens einem der vorhergehenden Ansprüche, **dadurch gekennzeichnet, daß** der Schiebedachrahmen (4) und das feste Fahrzeugdach (1) im Randbereich der Dachöffnung (2) einen Spalt zur Aufnahme einer Dichtung (8) bilden.

6. Dachaufbau nach Anspruch 5, **dadurch gekennzeichnet, daß** der Schiebedachrahmen (4) und/oder das feste Fahrzeugdach (1) wenigstens einen im wesentlichen vertikal verlaufenden Bereich (47, 1A) zur Fixierung der Dichtung (8) aufweisen.

7. Dachaufbau nach einem der vorhergehenden Ansprüche, **dadurch gekennzeichnet, daß** der Schiebedachrahmen (4, 14, 34) eine Wasserrinne (34D; 48) bildet.

8. Dachaufbau nach einem der vorhergehenden Ansprüche, **dadurch gekennzeichnet, daß** die Höhe der Kleberaupen (5,6; 15,16; 35,36) zwecks Höheneinsiellung des Deckels (3; 13; 33) gegenüber dem festen Fahrzeugdach (1; 11; 31) variabel ist.

## Claims

1. A roof structure for a vehicle with a cover (3) optionally closing a roof aperture (2; 12, 32) in a fixed vehicle roof (1; 11; 31) and of which the actuating mechanism is disposed on a sliding roof frame (4; 14; 34) which on the under side engages around the roof aperture (2; 12; 32), the sliding roof frame being directly connected to the fixed vehicle roof (1; 11; 31) by at least one line of adhesive (5, 6; 15, 16; 35, 36), **characterised in that** an open profiled part (44, 45) of the sliding roof frame (4), by two spaced-apart lines (5, 6) of adhesive, constitutes a hollow chamber section (7) together with the fixed vehicle roof (1).

2. A roof structure according to claim 1, **characterised in that** in addition at least one hollow chamber section (7; 17; 37; 34A, 34B, 34C) which imparts enhanced flexural and torsional rigidity is provided as an integral constituent part of the sliding roof frame (4; 14; 34).

3. A roof structure according to claim 1 or 2, **characterised in that** the sliding roof frame (4) has in its region which is directed away from the roof aperture (2) an L-shaped profile, of which the vertical arm (45) has at the upper end a substantially horizontal web (46), whereby one of the lines of adhesive (6) is disposed on the upper face of this web (46) while the second line of adhesive (5) is disposed at the end of a horizontal arm (44).

4. A roof structure according to at least one of the preceding claims, **characterised in that** integrated into the sliding roof frame (4) are guide channels (41, 42, 43) for a mechanism to actuate the cover (3).

5. A roof structure according to at least one of the preceding claims, **characterised in that** the sliding roof frame (4) and the fixed vehicle roof (1) form in the marginal area of the roof aperture (2) a gap to accommodate a seal.

6. A roof structure according to claim 5, **characterised in that** the sliding roof frame (4) and/or the fixed vehicle roof (1) have at least one substantially vertically extending area (47) for fixing the seal (8).

7. A roof structure according to one of the preceding claims, **characterised in that** the sliding roof frame (4, 14, 34) forms a gutter (34D; 48).

8. A vehicle roof according to one of the preceding claims, **characterised in that** the height of the lines of adhesive (5, 6; 15, 16; 35, 36) is variable for the purpose adjusting the height of the cover (3; 13; 33) in relation to the fixed vehicle roof (1; 11; 31).

## Revendications

1. Structure de toit pour un véhicule, comportant un capot (3 ; 13 ; 23 ; 33) qui obture sélectivement une ouverture (2 ; 12, . 32) pratiquée dans un toit fixe (1 ; 11 ; 31) dudit véhicule, et dont le mécanisme d'actionnement est disposé sur un encadrement (4 ; 14 ; 34) de toit coulissant entourant l'ouverture (2 ; 12 ; 32) du toit à partir de la face inférieure, et directement relié audit toit fixe (1 ; 11 ; 31) du véhicule par l'intermédiaire d'au moins une chenille d'adhésif (5, 6 ; 15, 16 ; ; 35, 36), **caractérisée par le fait qu'**une pièce profilée ouverte (44, 45) de l'encadrement (4) du toit coulissant forme un profil (7) à cavité en association avec le toit fixe (1) du véhicule, par l'intermédiaire de deux chenilles d'adhésif (5, 6) distantes l'une de l'autre.

2. Structure de toit selon la revendication 1, **caractérisée par le fait qu'**au moins un profil (7 ; 17 ; 37 ; 34A, 34B, 34C) à cavité, conférant une rigidité accrue à la flexion et à la torsion au toit du véhicule, est additionnellement prévu en tant que partie intégrante de l'encadrement (4 ; 14 ; 34) du toit coulissant.

3. Structure de toit selon la revendication 1 ou 2, **caractérisée par le fait que** l'encadrement (4) du toit coulissant présente, dans sa région éloignée de l'ouverture (2) du toit, un profil configuré en L dont la branche (45) disposée verticalement comporte, à l'extrémité supérieure, une membrure (46) sensiblement horizontale, l'une (6) des chenilles d'adhésif étant située sur la face supérieure de cette membrure (46), et la seconde chenille d'adhésif (5) étant située à l'extrémité d'une branche horizontale (44).

4. Structure de toit selon au moins l'une des revendications précédentes, **caractérisée par le fait que** des canaux de guidage (41, 42, 43 ), destinés à un mécanisme d'actionnement du capot (3), sont intégrés dans l'encadrement (4) du toit coulissant.

5. Structure de toit selon au moins l'une des revendications précédentes, **caractérisée par le fait que** l'encadrement (4) du toit coulissant et le toit fixe (1) du véhicule forment, dans la région marginale de l'ouverture (2) du toit, un interstice destiné à recevoir une garniture d'étanchement (8).

6. Structure de toit selon la revendication 5, **caractérisée par le fait que** l'encadrement (4) du toit coulissant et/ou le toit fixe (1) du véhicule présente(nt) au moins une région (47, 1A) s'étendant pour l'essentiel verticalement, en vue de la consignation à demeure de la garniture d'étanchement (8).

7. Structure de toit selon l'une des revendications précédentes, **caractérisée par le fait que** l'encadrement (4, 14, 34) du toit coulissant forme une gouttière (34D ; 48).

8. Structure de toit selon l'une des revendications précédentes, **caractérisée par le fait que** la hauteur des chenilles d'adhésif (5, 6 ; 15, 16 ; 35, 36) est variable, en vue du réglage en hauteur du capot (3 ; 13 ; 33) vis-à-vis du toit fixe (1 ; 11 ; 31) du véhicule.
